# NEW EUROPEAN PATENT SPECIFICATION

(11) **EP 2 056 085 B2**
(45) Date of publication and mention of the opposition decision: **22.07.2015**
(45) Mention of the grant of the patent: 02.03.2011
(21) Application number: 08018544.0
(22) Date of filing: 23.10.2008
(51) Int. Cl.: G01L 1/16, G01L 9/00

(54) **Package for a strain sensor**
Verpackung für einen Dehnungssensor
Boîtier pour capteur de contraintes

(30) Priority: 29.10.2007 EP 07021086; 02.11.2007 US 984757 P; 16.11.2007 US 988474 P
(43) Date of publication of application: 06.05.2009
(73) Proprietor: Schott AG, 55122 Mainz (DE); Transense Technologies PLC, Bicester, Oxfordshire OX25 5HD (GB)
(72) Inventor: Fink, Thomas, Dipl.-Ing., 84028 Landshut (DE); Lohr, Raymond, Dr., The Square Long Crendon Bucks HP18 9 AA (GB)
(74) Representative: Sawodny, Michael-Wolfgang

(56) References cited:
- GB-A- 2 361 318
- GB-A- 2 361 318
- US-A- 4 213 104
- US-A- 4 213 104
- US-A- 4 422 055
- US-A- 4 422 055
- US-A1- 2006 130 585
- US-A1- 2007 019 362
- US-A1- 2007 193 362
- "Precision Strain Gages" VISHAY MICRO-MEASUREMENTS, [Online] vol. CATALOG, no. 500, 3 September 2006 (2006-09-03), XP002514895 Retrieved from the Internet: URL:http://web.archive.org/web/20060903063 206/http://www.luchsinger.it/pdf/cat500.pd f> [retrieved on 2009-02-11]
- "Precision strain gauges" VISHAY MICRO MEASURMENTS, No.500 e September 2006 ARAMCO product dat

## Description

The invention relates to a package for a strain sensor.

Many applications call for strain measurement including static and dynamic loading of structures and components and for the subsequent derivation of Information from such measurement. From US 5,585,571 a method and apparatus for measuring strain has been made known. The method and apparatus for measuring strain as described in US 5,585,571 is based on a so called surface acoustic wave resonator (SAW-resonator).

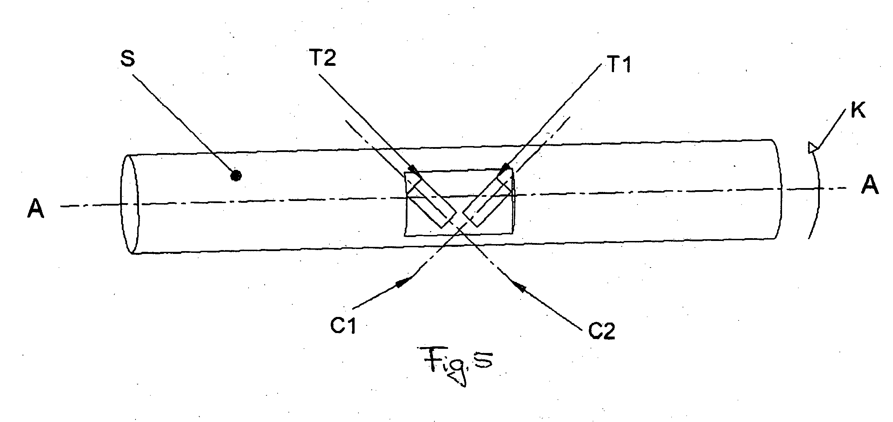

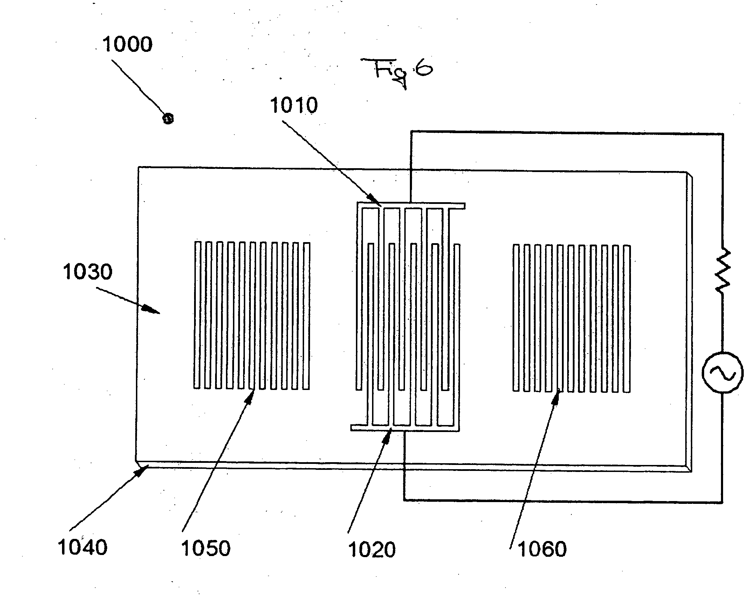

Such a resonator is made up of a microstructure deposited on a piezoelectric substrate. The microstructure is formed by at least one pair of interleaved comb-like ("interdigitated") electrodes deposited as a thin metal conducting layer on a substrate. In figures 5 and 6 of the application a basic model of a one port surface acoustic wave resonator used as a strain sensor is shown.

The strain sensor on basis of a surface acoustic wave (SAW) resonator is described now in further detail. The resonator has at least one interdigital transducer (IDT) with two electrical terminals and it may also contain two reflecting periodic gratings positioned one on each side of the transducer. The RF signal from the signal source applied to the IDT terminal excites surface acoustic waves propagating in opposite directions. As a result of reflections of SAW from the gratings a resonance with a very high quality (Q) factor (of the order of 10000) occurs at the frequency of several hundred megahertz. The resonant frequency of the SAW resonator can be measured in a contactless way by an electronic interrogation unit. In the event that the substrate of the SAW resonator is subject to strain, the periods of the gratings and the IDT change and the SAW propagation velocity also changes proportionally to the strain value. As a result the resonant frequency also changes proportionally to the strain. By measuring the change in the SAW resonant frequency one can measure the strain. The SAW strain sensing element may contain several electrically connected SAW resonators in order to exclude or compensate influence of temperature, variation of electric parameters of the RF communication channel and some undesirable mechanical forces, in particular, when measuring torque applied to a shaft by means of measuring the direct strain components (tension and compression) of the shear strain on its surface, there may be two SAW resonators positioned on a single substrate at 45° to the shaft axis. In this case the difference between the two resonant frequencies is proportional to the torque value.

A third SAW resonator may also be positioned on the same single substrate in order to sense temperature, thereby permitting temperature compensated torque to be determined from a single SAW sensor.

The operational frequencies of an SAW resonator can be selected in a wide frequency range extending from a few megahertz up to a few gigahertz.

The SAW resonator can be operated in many different modes as described for example in US 5,585,571 whose content is fully enclosed in this application by reference.

The choice of the operating mode depends on the strain measurement which should be undertaken,

In order to prevent the SAW substrate from environmental harm, the SAW substrate should be enclosed within a hermetic package. According to the state of the art, SAW substrates are packaged in hermetic packages consisting of two pieces made from materials such as austenitic stainless steel, The packages consisting of two pieces, a flat base part and a top head part, are assembled together for example by welding. The packages furthermore also have an electrical, leadthrough which is made hermetic by use of glass fritted seal. The glass fritted seal functions either by a difference in the expansion coefficient known as a compression seal or by bonding to preoxidized surface layer known as a matched seal. The compression seal is normally used in austenitic stainless steel packages, whereas the matched seal is used in KOVAR-packages.

In the state of the art, the SAW substrate used in a strain sensor is die bonded to the base part of the package. The base part is then bonded or welded to the component from which the strain should be determined. For determining the strain it is necessary, that the strain is transferred from the component via the base part onto which the SAW substrate is bonded to the SAW resonator or resonators elastically, i.e. without hysteresis, plastic or creep deformation.

The two piece packages suffer from the problems that either they have poor elastic properties or that the glass fritted compression seal, through which the leadthroughs are guided, cracks.

From US 2006/0130585 A1 a package for a torque SAW resonator has been made known. The package system made known from US 2006/0130585 A1 is designed to maximize the strain in the torque SAW resonator. The base part of the package is made from a high strength stainless steel, whereas the package wall is formed from a more flexible stainless steel. A disadvantage of the package made known from US 2006/0130585 is that the term "flexible" is not defined. All steels, whether martensitic, austenitic or precipitation hardening have a similar Young's (E) Modulus of around 200GPa which defines the slope of the elastic stress-strain line and therefore the intrinsic elastic stiffness of the material. In addition US 2006/0130585 describes neither the stress-strain state of the materials indicated. nor the manufacturing process, both of which are critical.

From US 4,213,104 and US 4,422,055 surface acoustic wave devices have been made known. The package of the devices shown in US 4,213,104 and US 4,422,055 comprise a base, which is the SAW substrate material, a spacer and a cover. In US 4,213,104, all parts are made are made from a material having substantially the same thermal expansion characteristics and crystallographic orientation. Since the requirements for a SAW substrate are a piezo-electric crystalline material, such as quartz, this package is characteristic of an "all quartz" package.

The present invention deals with a 3 part metallic package into which is bonded a piezo-electric substrate on which SAW resonators are fabricated. The design, material and manufacturing processes involved are fundamentally different to those described in US 4,213,104.

In US 4,422,055, a cut (circular slot) is introduced which surrounds the SAW couplers in order to isolate them from external strains.

In GB 2,346,493 a package for a strain sensor is disclosed. As in US 4,213,104 and US 4,422,055 the base (SAW substrate material) is quartz as is the lid. The central part is a thin window of adhesive film, so that this is another design approach to an "all quartz" package.

"All quartz" packages have potential cost advantages, however their intrinsic brittle nature (no capacity for inelastic deformation) means they are less tolerant of mechanical shock and cannot be attached to a structural component by means such as welding which are desirable for high volume automotive applications.

It is therefore an object of the invention to provide a package for a strain sensor which avoids the disadvantages mentioned in the state of the art. Especially a package for a strain sensor should be provided which can be mounted to a structural component so that good mechanical coupling is provided enabling elastic strain transfer to the SAW substrate which is bonded inside the package.

The above mentined problem ist solved by claims 1.

According to the invention the problem is solved by a package consisting of at least three elements or parts, a base part, a central part and a lid part, wherein the central part is made from an annealed material and the base part is made from a material which is flexible. In order to have a good reproducibility, the inventors have found out that the material of the base part must have good elastic properties, Materials of good elastic properties for the base part are material having essentially linear elasticity and a high yield strain. The yield strain describes the limit of elastic deformation of a material. By defining a high yield strain for the base part, a major benefit for the measurement performance of the final complete strain sensor system, comprising the package and the strain sensor enclosed in this package and attached to the base part, can be achieved in terms of low hysteresis and creep. Preferably the yield strain (limit of elastic deformation) of the material of the base plate is chosen to be more than 2000 microstrain (0,20% strain), most preferably more than 2500 microstrain (0,25% strain).

Examples of materials achieving such a high yield strain are strain hardened (cold rolled) austenitic stainless steels such as AISI 304 and hardened martensitic stainless steels such as AISI 420 or 17-4 PH (precipitation hardened).

All three parts of the package are made of metallic components and the strain sensor in form of a piezo-electric die is bonded to the base part. All three metallic components are made of the same material with regard to the thermal expansion coefficient (CTE). If all three metallic components have the same CTE, then thermal strains due to temperature change can be eliminated. The base part consists of strain hardened austenitic stainless steel and the central part is made from annealed austenitic stainless steel. The lid part can be made either from strain hardened stainless steel or from annealed stainless steel.

All three parts are made from austenitic stainless steel.

For the central part it is important that the material is appropriate to glass fritting electrical leadthroughs by the compression seal process.

Preferred austenitic stainless steels are AISI 304 and AISI 316. Most preferred are austenitic stainless steels with a low carbon content, such AISI 304L or AISI 316L which are better suited to welding, in particular laser-welding, by virtue of lower embrittlement in the heat affected zone (HAZ) and, as a result, a lower propensity to cracking.

By dividing the package for a strain sensor in three parts, it is possible, to glass frit the electrical leadthrough, for example in the form of a compression seal at elevated temperature without affecting the elastic properties of the base part onto which the SAW substrate is mounted.

In order to glass frit the electrical leadthroughs, temperatures of more than 1000°C are used. When the central part is heated to such temperatures, irrespective of the stainless steel selected, it will become annealed and its elastic properties, especially yield strain, will be much reduced.

By first manufacturing the central part with the glass fritted compression seal at high temperatures of approximately 1000° C, the elastic properties of the separate base part are not compromised. The glass fritted compression seal can be manufactured in a temperature range preferably between 800°C and 1100°C, preferred between 900°C and 1050°C and most preferred between 950°C and 1020°C. A steel which is temperature processed in this temperature region will in general become annealed.

Since only the central part is annealed, only this central part made from austenitic stainless steel loses its elastic properties, whereas the elastic properties of the base part made of strain hardened (cold rolled) austenitic stainless steel can be retained because it is not annealed.

Since the base part is made from a strain hardened austenitic stainless steel, the SAW substrate can be mounted onto the base part and the strain from outside the package transferred to the SAW resonator or resonators via the strain hardened austenitic base part elastically, i.e. without hysteresis, plastic or creep deformation.

The use of austenitic stainless steel as a package material provides for high resistance to oxidation and corrosion. Furthermore, austenitic stainless steel provides for a package material which can be joined successfully together by welding or bonding. Furthermore, the use of austenitic stainless steel as material for the package provides hermetic electrical leadthroughs, when used together with a compression sealing technique.

By using either flanges or circumferential slots in the central part the central part is thermally decoupled from the area where bonding is performed.

Within a temperature range from -40°C to 150° C, the austenitic stainless steel can provide a high elastic yield strain of 2500 microstrain or more as a strain hardened (cold rolled) material.

The invention not only provides for an improved package for a strain sensor consisting of at least three parts with the central part comprising the leadthroughs, but also for an improved method of producing a package for a strain sensor, having at least a base part, a central part and a lid part.

According to the inventive method in the first step of producing the hermetic package, the leadthrough is glass fritted to the central part for example by a temperature of approximately more than 1000° C providing for a compression seal due to differences of the expansion coefficient of the glass material and the austenitic stainless steel material.

After the leadthrough is glass fritted to the central part at a high temperature, the central part is attached to the base part at much lower temperatures for example by bonding or welding. Preferred welding processes are resistance welding, laser welding, electron beam welding or seam welding. The base part is normally a flat component. If the central part is attached to the base part by welding then one has to ensure, that the heat affected zone (HAZ) due to the weld is small and does not extend into the region of the base part where the SAW-resonator will be bonded.

After the central part is attached, retrospectively connected to the base part by bonding or welding, the SAW substrate is mounted on to the base part. For mounting the SAW substrate (a piezo-electric die) on to the base part a high strength, high glass transition temperature (Tg), adhesive is used to ensure low hysteresis and low creep.

After the SAW substrate is mounted on to the base part, the SAW resonator or resonators are electrically connected to the electrical leadthroughs, for example by a gold wire bonding process.

After the aforementioned steps are completed, the package is closed by attaching the lid part to the central part. The SAW substrate, including SAW resonators, is then totally encapsulated in a hermetic way.

A further advantage of the present invention is that it makes no use of a cut in order to isolate the SAW couplers from external strains. According to the invention the purpose of the base is to couple the external strains in the whole of the base Into the piezo-electric substrate which is bonded to it.

The invention will now be described with regard to the pictures. The pictures are only embodiments of the invention. The invention is not restricted to the embodiments shown in the figures. The figures show:
Fig. 1 an exploded view of a package according to the invention;
Fig. 2 a first embodiment of a package according to the invention;
Fig. 3 a second embodiment of the invention;
Fig. 4 stress/strain curver for austenitic stainless steel.
Fig. 5 an embodiment of a SAW-sensor for measuring a torque
Fig. 6 a schematic of a one port resonator.

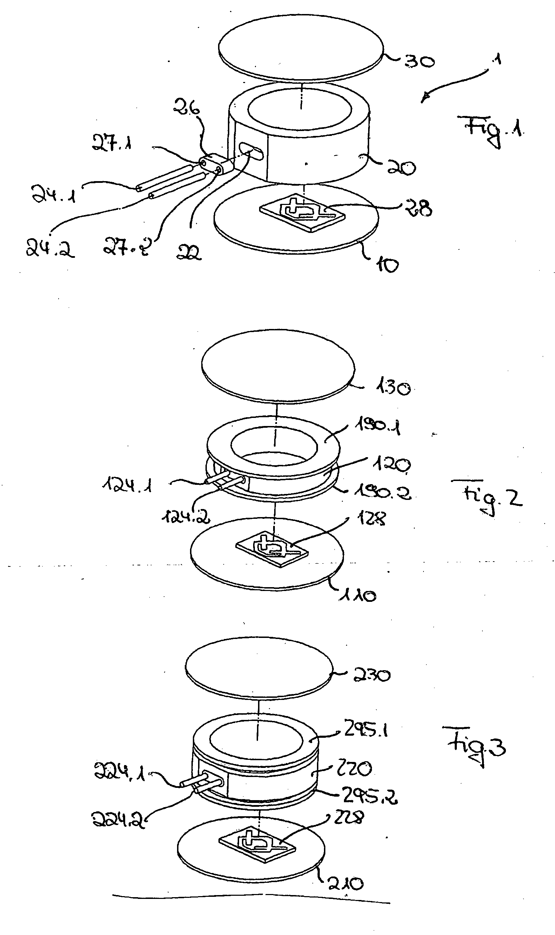

Fig. 1 shows an exploded view of the different parts of a package for a strain sensor according to the invention.

The package comprises three main parts, a base part 10 which is shown in the embodiment as a flat plate, a central part 20 which is shown in the embodiment in a ring shaped form and a lid or upper part 30.

The base part 10 has to be made from a material with linear elastic behaviour and a high yield strain in order to ensure a linear response from the sensor with minimal hysteresis and creep.

The central part 20 requires a material suitable for glass fritting which involves temperatures over 1000°C. Such temperatures will anneal out (substantially reduce) the elastic range of ferritic / martensitic steels induced by hardening and tempering or of austenitic steels by cold working. In addition the material of the central part must be readily weldable or bondable to the base part.

If the central and base parts were not separate, the elastic range of the base of the package would be reduced unacceptably by the glass fritting process and the performance of the sensor as a whole compromised.

The lid part 30 must be readily weldable or bondable to the central part.

The base, central and lid parts are made of materials with similar thermal expansion coefficient (CTE), and good resistance to oxidation and corrosion.

Preferably the thickness of the base and lid parts and the wall thickness of the central part should be as thin as practically possible, e. g. 0.1 to 1 mm and preferably 0.2 to 0.6 mm, in order to reduce the mechanical stiffness of the package. Reducing the package stiffness reduces the stress level in the bonded or welded connection between the package and the component on which the strain is to be measured, which benefits the durability of the SAW sensor system.

The base part 10, the central part 20 as well as the lid part 30 are all made of the same material, which is austenitic stainless steel, for example austenitic stainless steel AISI 304. Most preferred is austenitic steel AISI 304L. The central part 20 is made of annealed austenitic stainless steal, whereas the base part is made of a strain hardened (cold rolled) austenitic stainless steel. The annealed austenitic stainless steel is ideal for glass fritting, whereas the cold worked austenitic stainless steel has a high yield strain. Such an embodiment consisting mainly of austenitic steel provides for similar thermal expansion coefficient (CTE) for all different parts of the package.

The use of the same material for all parts of the hermetic package has the benefit that for all package elements a common coefficient of thermal expansion (CTE) with good oxidation and corrosion resistance properties results.

The central part 20 of the package 1 comprises an opening 22 for the leadthroughs 24.1, 24.2 from the outside of the package into its interior.

In the opening 22 a glass part 26 is introduced. The glass part 26 has the same form as the opening 22 of the central part. Furthermore, the glass part comprises two openings 28.1, 28.2 through which the leadthroughs 24.1, 24.2 are fed.

After the glass part, together with the leadthroughs, is introduced into the opening of the central part, the central part is heated to a temperature of around 1000° C, melting the glass, which in turn adheres to the leadthroughs and the wall of the central part. When the assembly is cooled from the high temperature of around 1000° C down to room temperature, first the glass solidifies. Then, due to the higher expansion coeffcient (CTE) of the material of the central part compared with the CTE of the glass frit material, a compressive stress is developed which in turn ensures a hermetic seal of the leadthrough, the glass part and the central part. Such a glass fritted seal is known as a compression seal.

The next step is to attach the central part 20 to the base part 10 and thereby form an intermediate assembly. The attachment of the central part 20 to the base part 10 can be made by different techniques. A first alternative is welding with a suitable process like laser welding. Another technique is the bonding technique. Both techniques are well known for a person skilled in the art. Apart from laser welding there is also the possibility of resistance welding, press-fit welding and cold welding. Also soldering would be possible. The interconnection of the central part 20 to the base part 10 by welding techniques, bonding techniques or soldering leads to a hermetic interconnection or attachment which is also vacuum tight.

After the central part 20, including leadthroughs, is attached to the base part, the SAW substrate 28 (typically crystalline quartz) incorporating up to three SAW resonators is bonded to the base part 10. In order to attach the SAW substrate to the base plate 10, a high glass transition temperature (T_{g}) adhesive is utilised to ensure low hysteresis and creep.

After the SAW substrate is mounted onto the base plate, the SAW resonator or resonators are electrically connected to the leadthroughs 24.1 and 24.2 by a gold wire bonding process (not shown). Instead of connecting the SAW resonators to the leadthroughs by bonding with gold wire, aluminium wire can be used.

After the SAW resonators are wire-bonded to the leadthroughs the package is completed by bonding or welding, preferably laser welding, the lid part 30 to the assembly consisting of base part 10 and central part 20. The lid-part 30 is made from austenitic stainless steel.

The completed package can then be bonded to the structural component for which the strain is to be determined. The strain on the mating surface of the structural component, which is the result of direct loading of the component, e.g. by tension, compression, bending or torque or the result of a temperature change, should be transferred to the SAW substrate elastically, i.e. without hysteresis, plastic or creep deformation.

Therefore the base part 10, which consists of austenitic stainless steel AISI 304L, has to be manufactured from material which has previously been strain hardened (cold rolled) to have the elastic properties required for the linear transfer of the strain from the component via the base part into the SAW substrate.

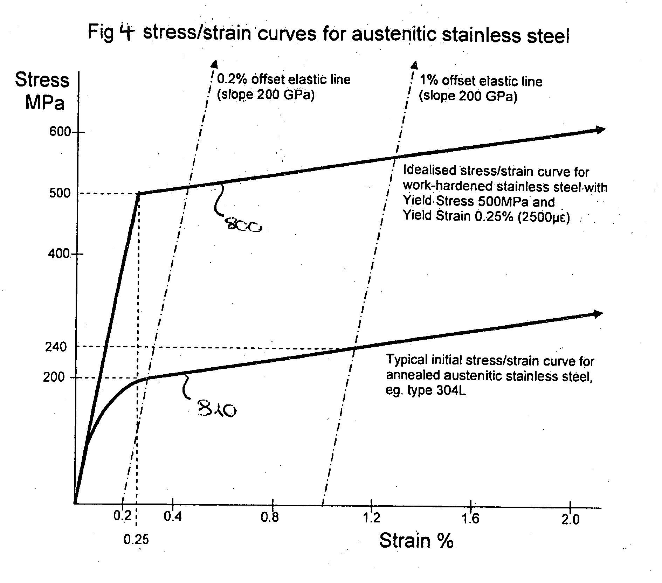

In fig. 4, stress/strain curves representative of austenitic stainless steel e.g. type 304L are shown. Reference 800 denotes the tensile stress/strain curve for a work hardened stainless steel with yield stress 500MPa and yield strain of 2500 microstrain (0,25%). Reference 810 denotes the tensile stress/strain curve for an annealed austenitic stainless steel including the region of steadily increasing stress beyond about 200MPa which corresponds to strain hardening. The 0.2% and 1% offset elastic lines are drawn to ensure the stresses at their intersections with the stress-strain curve tie up with the published stress values for AISI 304L.

If, in Reference 810, tensile straining is continued up to a stress of around 500MPa and then the direction of straining is reversed, the stress will reduce linearly to zero down a line parallel to the initial load line. On reloading, a new stress-strain curve will be generated similar in form to the curve in Reference 800. In other words the material will have been strain hardened so as to increase its range of linear elastic behaviour to a new yield point of 500MPa. This is the ideal material condition from which to manufacture the base part. If tensile straining were to continue, the stress-strain line would (as shown) sharply reduce in slope to continue strain hardening. In a typical tensile test, the test specimen will eventually form a neck, achieve its maximum level of stress, then rather quickly reduce in stress until it breaks.

It can also be clearly seen from fig 4 that by annealing previously strain hardened austenitic stainless steel the good elastic properties, i.e. the high yield point and linearity between stress and strain, get lost. While the stress/strain curve for a work hardened stainless steel may be linear up to a stress of 500MPa with a yield strain of 0,25% (2500 microstrain), the annealed material loses its elastic range to a large extent so that a base part manufactured from material in this condition is likely to result in a strain sensor which displays non linearity, hysteresis and creep. In another embodiment the work hardened stainless steel is linear up to a stress of 400MPa and a yield strain of 0,20% (2000 microstrain).

Materials for the base part have a yield strain of more than 1500 microstrain, especially more than 2000 microstrain, most preferred more than 2500 microstrain. In practice only the left hand side of the diagram up to about 0,2 % strain (2000 microstrain) is used by a SAW resonator located on the base plate of the package, but only in an extreme overload condition. The normal working strain would not normally exceed 0,05 % (500 microstrain). As is clear from figure 4, if the base part and the central part are joined together, or are a single part before the high temperature glass fritting process is carried out, then the base part as well as the central part will become annealed and the base part will lose its good elastic properties. By making the base part and the central part separate and joining them together after the leadthroughs are introduced in the central part by a glass fritting process, the high yield strain of the base part is retained with a major benefit to the measurement performance of the final complete sensor in terms of linearity, low hysteresis and creep.

In figure 2 a first embodiment of the invention is shown. All parts which correspond to similar parts in figure 1 are denoted with the same reference number plus 100. In the embodiment shown in figure 2, the central part 120 comprises two flanges 190.1, 190.2. The two flanges 190.1, 190.2 are used in a welding process, to interconnect the base part 110 as well as the lid part 130 to the central part 120. If for welding a laser welding process is used, the heat affected zone due to the weld is small and does not extend to the region in which the SAW-sensor (128) is attached to the base part 110.

The lid-part 130 consists as the central part 120 of a material readily weldable or bondable and with good resistance to oxidation and corrosion such as e.g. an austenitic stainless steel.

As already explained above, the base part 110 is made of strain hardened (cold rolled) austenitic stainless steel with a high elastic limit.

In figure 3 an alternative embodiment of the package according to the invention is shown. Identical parts as in figure 1 and 2 are denoted by the same reference numbers plus 200.

Instead of the flanges, the central part 220 shown in figure 3 has only an upper ring 295.1 and a lower ring 295.2 with a contour identical to the contour of the central part (280). In the embodiment shown in figure 3 the central part is connected to the lid part 230 and the base part 210 by bonding. In the embodiment shown in figure 3 the central part 220 is an annular component with a pair of circumferential slots which are sufficiently deep to provide both thermal and mechanical decoupling. Such an embodiment has the advantage, that the central part is thermally decoupled from the area in which the bonding is performed. Therefore when welding e.g. the base part and/or the lid part to the central part a lower amount of energy is needed for laser welding. Furthermore, the central part is mechanically decoupled from the base part 10.

In figure 5, the principal of a torque-measurement with two SAW-resonator transducers T1 and T2 mounted on the shaft S are shown. The centrelines C1 and C2 are located at 45 degrees to the longitudinal axes A of the shaft S from which the torque should be measured. Furthermore the centrelines C1 and C2 are at right angles to one another. The torque applied to the shaft in clockwise direction shown by the arrow K in figure 5 will induce compressive strain in transducer T1 and tensile strain in transducer T2. Any temperature change would apply equally to both elements. If the geometry of the transducers T1, T2 is changed for example by a torque, then the difference frequency between the SAW resonators arising from the change in shape can be measured. This is extensively described for example in US Patent US 5,585,571, whose disclosure content is fully enclosed in this application.

In figure 6 a detailed embodiment of a SAW-strain sensor, a so called SAW (Surface Acoustic Wave) resonator is shown. Such a resonator 1000 is made up of a conducting thin-film microstructure. Normally an aluminium film with a thickness of the order of 100 nm is used. The microstructure is formed by at least one interdigital transducer (IDT) consisting of two comb-like electrodes 1010 and 1020 deposited on the upper surface 1030 of a piezoelectric substrate 1040. The substrate can be made of a number of materials from flexible plastic polymers to hard materials such as ceramics, quartz, lithium niobate etc. Apart from the IDT, the microstructure may also contain two reflective gratings 1050 and 1060 positioned on each side of the transducer. The gratings consist of a number of periodically spaced reflecting elements (either thin metal strips or shallow grooves). The gratings enhance reflections of the SAW generated by the IDT and hence improve the quality (Q) factor of the resonator.

With the invention, for the first time a package for a SAW-strain sensor consisting of three parts is provided. The package according to the invention is made of a single material and has therefore a common thermal expansion coefficient for all package elements. Furthermore it has good oxidation and corrosion resistance properties. The package according to the invention can comprise conventionally fritted compression seals made of a glass material with a low thermal expansion coefficient between 9,6 x 10⁻⁶ 1/K to 5,0 x 10⁻⁶ 1/K. The expansion coefficient is given with regard to a temperature range from 20 °C to 300° C according to DIN 52328.

Furthermore, the package provides for an elastic strain transfer from a structural component such as an automotive flexplate or driveshaft to the SAW strain sensor.

The SAW strain sensor according to the invention can be used in various fields such as torque sensors. The strain sensor according to the invention comprises the SAW substrate, including SAW resonator(s), and the hermetic package.

The invention provides for a small size strain sensor which has a low sensitivity to magnetic fields. Furthermore it provide for an extraordinary precision of measurements of static and dynamic loads.

## Claims

1. Package for a strain sensor comprising:
- a base part (10) adapted to support a strain sensor (28);
- a central part (20) mounted on said base part, wherein said central part (20) includes leadthroughs (24.1, 24.2) and is adapted to enclose said strain sensor (28);
- a lid part (30) covering said central part (20);
**characterized in that**
said base part (10) has an elastic yield strain greater than 1500 microstrain in order to provide in a sensor system a linear measurement and said base part (10), said central part (20) and said lid part (30) are made of austenitic stainless steel having the same thermal expansion coefficient (CTE). wherein
said base part is made from strain hardened austenitic stainless steel, preferably AISI 304L,
said lid part is made from austenitic stainless steel.
said central part is made from annealed austenitic stainless steel, wherein said base part is readily weldable or bondable to said central part and wherein the central part (20) carries electrical leadthroughs which are hermetically glass fritted to the central part (20) and the central part (20) is attached to the base part (10) and the lid part by bonding or by welding, and the central part comprises two flanges (190.1. 190.2) or the central part is an annular component with a pair of circumferential slots, which are sufficiently deep to provide both thermal and mechanical decoupling.

2. Package for a strain sensor according to claim 1. wherein said base part has an elastic yield strain, preferably greater than 2000 microstrain, most preferably greater than 2500 microstrain.

3. Package for a strain sensor according to one of the claims 1 to 2, wherein said base part is readily weldable or bondable to a structural component for which the strain is to be measured.

4. Package according to one of the claims 1 to 3, wherein the package contains a SAW-sensor (28), including one or more resonators, which is bonded to the base part.

5. Package according to one of the claims 1 to 4,
wherein the materials of said base part (10), said central part (20) and said lid part (30) comprise AISI 304, AISI 304L, AISI 316, AISI 316L.

6. Package according to one of the claims 1 to 5,
wherein said base part (10) comprises strain hardened austenitic stainless steel, said central part (20) annealed austenitic stainless steel and said lid part (30) either strain hardened austenitic stainless steel or annealed austenitic stainless steel.

7. Method of producing a package for a strain sensor according to one of the claims 1 to 6,
having a base part (10), a central part (20), a lid part (30), leadthroughs (24.1, 24.2) and a strain sensor (28) with the following steps:
- the leadthroughs are glass fritted to the central part (20) providing a compression seal;
- the central part (20) is attached to the base part by bonding or by welding;
- after the central part (20) has been attached to the base part (10), the strain sensor is bonded to the base part (10);
- the strain sensor is electrically connected to the leadthroughs
- finally the lid-part (30) is attached to the assembly of the base part and the central part (20).

8. Method according to claim 7, wherein the leadthroughs (24.1, 24.2) are fritted to the central part (20) at a temperature in the range 800 to 1100°C, preferably between 900 and 1050°C, most preferred between 950 and 1020°C.

9. Method according to one of the claims 7 to 8, wherein the strain sensor (28) is bonded to the base part (10) by a high strength and high glass transition temperature (Tg) adhesive.

10. Strain sensor system, comprising a package according to one of the claims 1 to 6 and a strain sensor (28) enclosed in said package and attached to said base part (10) of said package.

11. Use of a strain sensor system, according to claim 10 for one or more of the following uses:
- as a torque splitter sensor
- as a torque sensor for electric power assisted steering (EPAS)
- as a crankshaft or flexplate torque sensor
- as a transmission output torque sensor
- as a drive shaft torque sensor
- as a shear strain sensor for a range of engineering structural applications
- as a tension - compression plus Poisson's ratio strain sensor for a range or engineering structural applications.

## Patentansprüche

1. Paket für einen Dehnungssensor, das Folgendes umfasst:
- ein Basisteil (10), das geeignet ist, einen Dehnungssensor (28) zu tragen;
- ein Mittelteil (20), das an dem Basisteil montiert ist, wobei das Mittelteil (20) Durchführungen (24.1, 24.2) umfasst und dazu geeignet ist, den Dehnungssensor (28) zu umschließen;
- ein Deckelteil (30), das das Mittelteil (20) abdeckt;
**dadurch gekennzeichnet, dass**
das Basisteil (10) eine elastische Streckdehnung größer als 1500 Mikrodehnungen (Microstrain) aufweist, um in einem Sensorsystem eine lineare Messung bereitzustellen, und dass das Basisteil (10), das Mittelteil (20) und das Deckelteil (30) aus austenitischem nichtrostendem Stahl mit demselben
Wärmeausdehnungskoeffizienten (CTE) gefertigt sind,
wobei
das Basisteil aus kaltverfestigtem austenitischem nichtrostendem Stahl, vorzugsweise aus AISI 304L, gefertigt ist,
das Deckeiteil aus austenitischem nichtrostendem Stahl gefertigt ist, das Mittelteil aus geglühtem austenitischem nichtrostendem Stahl gefertigt ist, wobei das Basisteil leicht an das Mittelteil geschweißt oder geklebt werden kann, und wobei das Mittelteil (20) elektrische Durchführungen aufweist, die hermetisch an das Mittelteil (20) glasgefrittet sind, und wobei das Mittelteil (20) durch Kleben oder Schweißen am Basisteil (10) und am Deckelteil befestigt ist, und wobei das Mittelteil zwei Flansche (190.1, 190.2) umfasst oder das Mittelteil eine ringförmige Komponente mit einem Paar außenumfänglicher Schlitze ist, die ausreichend tief sind, um eine thermische und mechanische Entkopplung zu ermöglichen.

2. Paket für einen Dehnungssensor gemäß Anspruch 1, wobei das Basisteil eine elastische Streckdehnung von vorzugsweise mehr als 2000 Mikrodehnungen (Microstrain), meistbevorzugt von mehr als 2500 Mikrodehnungen (Microstrain) aufweist.

3. Paket für einen Dehnungssensor gemäß einem der Ansprüche 1 bis 2, wobei das Basisteil leicht an eine Strukturkomponente, dessen Dehnung gemessen werden soll, geschweißt oder geklebt werden kann.

4. Paket gemäß einem der Ansprüche 1 bis 3, wobei das Paket einen SAW-Sensor (28) enthält, der einen oder mehrere Resonatoren aufweist und der an das Basisteil geklebt ist.

5. Paket gemäß einem der Ansprüche 1 bis 4, wobei die Materialien des Basisteils (10), des Mittelteils (20) und des Deckelteils (30) AISI 304, AISI 304L, AISI 316, AISI 316L umfassen.

6. Paket gemäß einem der Ansprüche 1 bis 5, wobei das Basisteil (10) kaltverfestigten austenitischen nichtrostenden Stahl umfasst, das Mittelteil (20) geglühten austenitischen nichtrostenden Stahl umfasst und das Deckelteil (30) entweder kaltverfestigten austenitischer nichtrostenden Stahl oder geglühten austenitischen nichtrostenden Stahl umfasst.

7. Verfahren zur Herstellung eines Pakets für einen Dehnungssensor gemäß einem der Ansprüche 1 bis 6,
umfassend ein Basisteil (10), ein Mittelteil (20), ein Deckelteil (30), Durchführungen (24.1, 24.2) und einen Dehnungssensor (28), mit folgenden Schritten:
- die Durchführungen werden an das Mittelteil (20) unter Bereitstellung einer Anschlagdichtung glasgefrittet;
- das Mittelteil (20) wird am Basisteil durch Kleben oder Schweißen befestigt;
- nachdem das Mittelteil (20) am Basisteil (10) befestigt worden ist, wird der Dehnungssensor an das Basisteil (10) geklebt;
- der Dehnungssensor wird mit den Durchführungen elektrisch verbunden;
- schließlich wird das Deckelteil (30) an der Baugruppe des Basisteils und des Mittelteils (20) befestigt.

8. Verfahren gemäß Anspruch 7, wobei die Durchgänge (24.1, 24.2) an das Mittelteil (20) bei einer Temperatur im Bereich von 800 bis 1100°C gefrittet werden, vorzugsweise zwischen 900 und 1050°C und meistbevorzugt zwischen 950 und 1020°C.

9. Verfahren gemäß einem der Ansprüche 7 bis 8, wobei der Dehnungssensor (28) an das Basisteil (10) mit einem Klebstoff mit hoher Festigkeit und hoher Glasübergangstemperatur (Tg) geklebt wird.

10. Dehnungssensorsystem, das ein Paket gemäß einem der Ansprüche 1 bis 6 und einen Dehnungssensor (28) umfasst, der von dem Paket umschlossen und am Basisteil (10) des Pakets befestigt ist.

11. Verwendung des Dehnungssensorsystems gemäß Anspruch 10 für eine oder mehrere der folgenden Anwendungen:
- als Drehmomentvertellersensor
- als Drehmomentsensor für elektrische Servolenkungen (EPAS)
- als Kurbelwellen- oder Flexplate-Drehmomentsensor
- als Getriebeausgangsdrehmomentsensor
- als Antriebswellendrehmomentsensor
- als Scherdehnungssensor für eine Reihe technisch-struktureller Anwendungen
- als Zug-Druck- plus Poissonsche-Zahl-Dehnungssensor für eine Reihe technisch-struktureller Anwendungen.

## Revendications

1. Conditionnement pour un capteur de contraintes comprenant :
une partie de base (10) adaptée pour supporter un capteur de contraintes (28);
une partie centrale (20) montée sur ladite partie de base, laquelle
partie centrale (20) comprend des traversées (24.1, 24.2) et est adaptée pour renfermer ledit capteur de contraintes (28) ;
une partie formant couvercle (30) qui couvre ladite partie centrale (20) ;
**caractérisé en ce que**
ladite partie de base (10) a une limite d'élasticité supérieure à 1500 µdef afin de créer dans un système de capteur une mesure linéaire et ladite partie de base (10), ladite partie centrale (20) et ladite partie formant couvercle (30) sont faites d'acier inoxydable austénitique ayant le même coefficient de dilatation thermique,
ladite partie de base est faite d'acier inoxydable austénitique écroul, de préférence AISI 304L,
ladite partie formant couvercle est faite d'acier inoxydable austénitique,
ladite partie centrale est faite d'acier inoxydable austénitique recuit, ladite partie de base étant facile à souder ou coller à ladite partie centrale et la partie centrale (20) portant des traversées électriques qui sont frittées en verre hermétiquement sur la partie centrale (20) et la partie centrale (20) étant fixée à la partie de base (10) et à la partie formant couvercle par collage ou par soudage, et la partie centrale comprenant deux brides (190.1, 190.2) ou la partie centrale étant un composant annulaire avec une paire de fentes clrconférentielles qui sont suffisamment profondes pour créer un découplage à la fois thermique et mécanique.

2. Conditionnement pour un capteur de contraintes selon la revendication 1, dans lequel ladite partie de base a une limite d'élasticité de préférence supérieure à 2000 µdef, et en particulier supérieure à 2500 µdef.

3. Conditionnement pour un capteur de contraintes selon l'une des revendications 1 à 2, dans lequel ladite partie de base est facile à souder ou à coller à un composant structurel dont les contraintes doivent être mesurées.

4. Conditionnement selon l'une des revendications 1 à 3, lequel conditionnement contient un capteur SAW (28) comprenant un ou plusieurs résonateurs, qui est collé à la partie de base.

5. Conditionnement selon l'une des revendications 1 à 4, dans lequel les matériaux de ladite partie de base (10), ladite partie centrale (20) et ladite partie formant couvercle (30) comprennent AISI 304, AISI 304L, AISI 316, AISI 316L.

6. Conditionnement selon l'une des revendications 1 à 5, dans lequel ladite partie de base (10) se compose d'acier inoxydable austénitique écroul, ladite partie centrale (20) d'acier inoxydable austénitique recuit et ladite partie formant couvercle (30) soit d'acier inoxydable austénitique écroul, soit d'acier inoxydable austénitique recuit.

7. Procédé pour la production d'un conditionnement pour un capteur de contraintes selon l'une des revendications 1 à 6, comprenant une partie de base (10), une partie centrale (20), une partie formant couvercle (30) des traversées (24.1, 24.2) et un capteur de contraintes (28), avec les étapes suivantes :
- les traversées sont frittées en verre sur la partie centrale (20) en créant un joint de compression ;
- la partie centrale (20) est fixée à la partie de base par collage ou par soudage ;
une fois la partie centrale (20) fixée à la partie de base (10), le capteur de contraintes est collé à la partie de base (10) ;
le capteur de contraintes est connecté électriquement aux traversées ;
enfin, la partie formant couvercle (30) est fixée à l'assemblage de la partie de base et de la partie centrale (20).

8. Procédé selon la revendication 7, dans lequel les traversées (24.1, 24.2) sont frittées sur la partie centrale (20) à une température comprise entre 800 et 1100°C, de préférence entre 900 et 1050°C, en particulier entre 950 et 1020°C.

9. Procédé selon l'une des revendications 7 à 8, dans lequel le capteur de contraintes (28) est collé à la partie de base (10) par un adhésif à haute résistance et à température de transition vitreuse (Tg) élevée.

10. Système de capteur de contraintes comprenant un conditionnement selon l'une des revendications 1 à 6 et un capteur de contraintes (28) renfermé dans ledit conditionnement et fixé à ladite partie de base (10) dudit conditionnement.

11. Utilisation d'un système de capteur de contraintes selon la revendication 10 pour un ou plusieurs des usages suivants :
comme capteur de répartiteur de couple
comme capteur de couple pour une direction à assistance électrique (EPAS)
comme capteur de couple d'un vilebrequin ou d'une tôle de volant moteur
comme capteur de couple en sortie de transmission
comme capteur de couple d'arbre moteur
comme capteur de contraintes de cisaillement pour diverses applications structurelles techniques
comme capteur de contraintes de traction et compression plus coefficient de Poisson pour diverses applications structurelles techniques.
